# EUROPÄISCHE PATENTANMELDUNG

(11) **EP 0 718 736 A1**
(43) Veröffentlichungstag der Anmeldung: **26.06.1996**
(21) Anmeldenummer: 95116332.8
(22) Anmeldetag: 17.10.1995
(51) Int. Cl.: G05D 5/03, B05C 11/10

(54) **Verfahren und Vorrichtung zum Bestimmen der auf einer Flächeneinheit vorliegenden Menge eines Klebstoffes sowie Verfahren und Vorrichtung zum Steuern der auf eine Flächeneinheit aufzutragenden Menge eines Klebstoffes**

(30) Priorität: 23.12.1994 DE 4446283; 04.01.1995 DE 19500073
(71) Anmelder: EMPE-WERKE Ernst Pelz GmbH & Co. KG, D-82532 Geretsried (DE)
(72) Erfinder: Urmann, Reinhard, D-93142 Maxhütte-Haidhof (DE)
(74) Vertreter: Goddar, Heinz J., Dr.

(57) **Zusammenfassung**

Bei einem Verfahren bzw. einer Vorrichtung zum Bestimmen der auf einer Flächeneinheit vorliegenden Menge eines Klebstoffes mit flüchtigem Anteil oder eines Heißschmelz-Klebstoffes wird die sich aus der Verdunstungskälte des flüchtigen Anteils ergebende Temperatur oder Temperaturdifferenz zur Umgebung bzw. die sich aus der Abstrahlungswärme des heiß aufgetragenen Klebstoffes ergebende Temperatur oder Temperaturdifferenz zur Umgebung auf der Flächeneinheit erfaßt und mittels einer zuvor für den Klebstoff erstellten Eichkurve die Menge an auf der Flächeneinheit vorliegendem Klebstoff ermittelt. Diese Vorgehensweise wird bei der Steuerung des Klebstoffauftrags auf ein flächiges Werkstück benutzt.

## Beschreibung

Die Erfindung betrifft ein Verfahren zum Bestimmen der auf einer Flächeneinheit vorliegenden Menge eines Klebstoffes mit flüchtigem Anteil oder eines Heißschmelz-Klebstoffes sowie eine Vorrichtung zum Durchführen des Verfahrens. Die Erfindung betrifft weiterhin ein Verfahren zum Steuern der auf eine Flächeneinheit aufzutragenden Menge eines Klebstoffes mit flüchtigem Anteil oder eines Heißschmelz-Klebstoffes und eine entsprechende Steuervorrichtung.

Um sicherzustellen, daß sich eine bestimmte Menge an Klebstoff auf einer Unterlage befindet, mit der ein weiteres Werkstück verklebt werden soll, genügt es oftmals nicht, vorab eine bestimmte Klebstoffmenge bereitzustellen und diese dann auf die Fläche aufzutragen. Poröse oder kapillare Unterlagematerialien nehmen beispielsweise einen Teil des aufgetragenen Klebstoffes in sich auf, so daß er für den eigentlichen Klebeprozeß nicht mehr in der ausreichenden Menge zur Verfügung steht. Dieses Problem stellt sich insbesondere dann, wenn auf Träger aus Vliesmaterialien, wie sie beispielsweise als Auskleidungsteile für Kraftfahrzeuge verwendet werden, Folien oder Dekormaterialien aufkaschiert werden sollen.

Bisher hat man sich damit beholfen, den Klebstoffauftrag visuell zu beurteilen. Um die Abschätzung möglichst genau vornehmen zu können, wird dabei der Klebstoff mit einem Farbzusatz versehen, so daß dann aus der Intensität der Färbung auf die Dicke der Klebstoffschicht geschlossen werden kann. Abgesehen davon, daß sich eine solche Einfärbung bei dem fertigen Produkt als äußerst störend erweisen kann, erfordert diese Vorgehensweise eine große Erfahrung der Person, die die Beurteilung durchführt. Bei neutraler Einfärbung, insbesondere für helle Teile, ist eine Beurteilung des Klebstoffauftrags trotzdem so gut wie ausgeschlossen.

Zudem steht diese Vorgehensweise auch einer Automatisierung des Klebstoffauftrages entgegen.

Es ist daher die Aufgabe der vorliegenden Erfindung, ein Verfahren so wie eine Vorrichtung zum Bestimmen der auf einer Flächeneinheit vorliegenden Menge eines Klebstoffes zur Verfügung zu stellen, das automatisch durchgeführt werden kann und auch die Möglichkeit eröffnet, den Klebstoffauftrag auf ein Werkstück zu automatisieren.

Die heute in großem Umfang verwendeten Klebstoffe weisen oftmals einen flüchtigen Anteil auf, der beispielsweise aus leichtflüssigen organischen Lösungsmitteln besteht.

Für solche Klebstoffe wird die obige Aufgabe durch ein Verfahren nach Patentanspruch 1 so wie eine Vorrichtung nach Patentanspruch 4 gelöst. Ein Verfahren zum Steuern des Klebstoffauftrags ist in Anspruch 6 angegeben, eine Steuervorrichtung ist Gegenstand des Anspruches 9.

Eine andere Klasse von Klebstoffen sind die Heißschmelz-Klebstoffe, die heiß auf die zu verklebenden Bereiche aufgetragen werden und nach dem Abkühlen ihre Klebkraft entfalten.

Für diese Klebstoffe wird die obige Aufgabe durch ein Verfahren nach Patentanspruch 2 so wie eine Vorrichtung nach Patentanspruch 5 gelöst. Ein Verfahren zum Steuern des Klebstoffauftrags ist in Anspruch 7 angegeben, eine Steuervorrichtung ist Gegenstand des Anspruches 10.

Erfindungsgemäß ist einerseits vorgesehen, daß die sich aus der Verdunstungskälte des flüchtigen Anteils des Klebstoffes ergebende Temperatur oder die Temperaturdifferenz zur Umgebung auf der Flächeneinheit erfaßt und mittels einer zuvor für den Klebstoff erstellten Eichkurve die Menge an auf der Flächeneinheit vorliegendem Klebstoff ermittelt wird.

Für Heißschmelz-Klebstoffe wird die sich aus der Abstrahlungswärme des heiß aufgetragenen Klebstoffes ergebende Temperatur oder Temperaturdifferenz zur Umgebung erfaßt und ansonsten wie zuvor verfahren.

Dabei ist sowohl eine flächenartige Erfassung als auch eine punktartige Erfassung der Meßgrößen möglich. Beispielsweise kann vorgesehen sein, daß die Temperaturen oder Temperaturpunktartige Erfassung der Meßgrößen möglich. Beispielsweise kann vorgesehen sein, daß die Temperaturen oder Temperaturdifferenzen auf mehreren punktartigen Bereichen der Flächeneinheit gemessen werden. Für die Auswertung kann dann entweder die Einzelinformation herangezogen werden oder aber, beispielsweise durch eine Mittelwertbildung, eine Abschätzung für die gesamte Flächeneinheit getroffen werden.

Eine entsprechende Vorrichtung zum Bestimmen der Klebstoffmenge besteht aus einer Wärmebildkamera, einem Pyrometer, einer Temperatursensoranordnung oder dergleichen, mit der die sich aus der Verdunstungskälte des flüchtigen Anteils des Klebstoffs bzw. der Abstrahlungswärme des Heißschmelz-Klebstoffes ergebende Temperatur oder Temperaturdifferenz zur Umgebung erfaßt wird. Sie weist weiter eine Auswerteeinrichtung auf, mit der aus der ermittelten Temperatur oder Temperaturdifferenz auf die Menge an aufgetragenem Klebstoff geschlossen wird.

Bei einem Verfahren zum Steuern der auf eine Flächeneinheit aufzutragenden Menge eines Klebstoffes mit flüchtigem Anteil oder eines Heißschmelz-Klebstoffes kann nun so vorgegangen werden, daß eine vorgebbare minimale Menge des Klebstoffes auf die Flächeneinheit aufgetragen wird, daß die sich aus der Verdunstungskälte des flüchtigen Anteils bzw. der Abstrahlungswärme des Heißschmelz-Klebstoffes ergebende Temperatur oder Temperaturdifferenz zur Umgebung auf der Flächeneinheit erfaßt und mittels einer zuvor für den Klebstoff erstellten Eichkurve die Ist-Menge an auf der Flächeneinheit vorliegendem Klebstoff ermittelt wird, daß die Ist-Menge mit einer zuvor festgelegten Soll-Menge verglichen wird und daß die sich aus dem Vergleich ergebende Differenzmenge an Klebstoff auf die Flächeneinheit aufgetragen wird.

Bei kritischen Materialien kann dieses Verfahren wiederholt angewendet werden, bis die erforderliche Menge an Klebstoff aufgetragen ist. Im allgemeinen wird es aber ausreichend sein, das Verfahren pro Flächeneinheit nur einmal ablaufen zu lassen.

Das eben beschriebene Steuerungsverfahren bietet die Möglichkeit, ein Temperaturprofil der gesamten Unterlage, auf die Klebstoff aufgetragen worden ist, zu erstellen und dann gezielt in einem automatisierten Verfahren Klebstoff nachträglich aufzubringen.

Dabei muß die Unterlage nicht eben sein, auch bei dreidimensionaler Ausbildung der Unterlage, wie sie beispielsweise bei Kraftfahrzeughimmeln oder Türinnenverkleidungen anzutreffen ist, liefern sowohl das Bestimmungsverfahren als auch das darauf basierende Steuerungsverfahren gute Ergebnisse.

In vielen Anwendungsfällen wird es auch möglich sein, Toleranzen für die Soll-Menge zuzulassen, wobei nur dann zusätzlich Klebstoff aufgetragen wird, wenn die ermittelte Ist-Menge an Klebstoff außerhalb des Toleranzbereiches liegt.

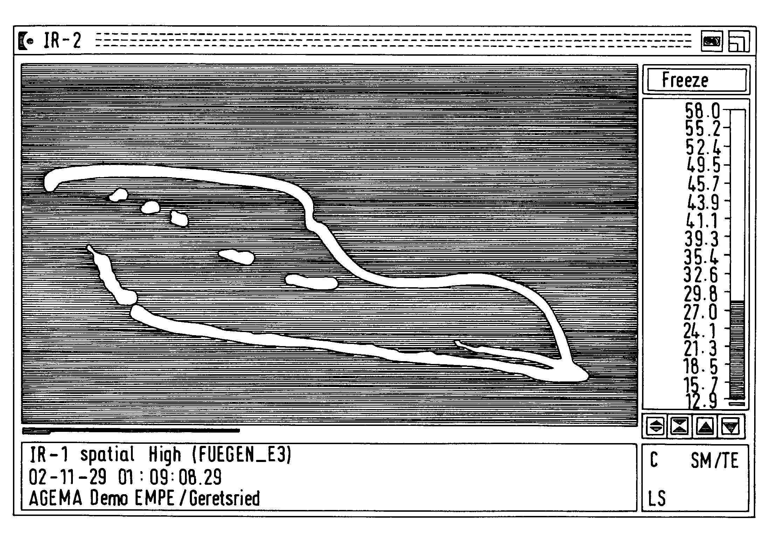

Die beigefügte Abbildung zeigt eine in Grautöne umgesetzte Farbdarstellung eines Temperaturprofils einer mit einem Heißschmelz-Klebstoff versehenen Unterlage, das mittels einer in der Bauindustrie üblichen Wärmebildkamera aufgenommen worden ist. Die hellen Bereiche sind die Bereiche hoher Abstrahlungswärme, also solche, auf die eine relativ große Menge an Klebstoff aufgetragen ist bzw. auf denen die Schichtdicke des Klebstoffes groß ist. Die hohe Abstrahlungswärme geht mit einer hohen Temperatur einher, wie sie am rechten Bildrand der Abbildung skaliert ist. Aus dem Profil ergeben sich deutlich die verschiedenen Schichtdicken an den unterschiedlichen Stellen der Unterlage bzw. die dort aufgetragenen Klebstoffmengen.

Es hat sich dabei gezeigt, daß die Verdunstungskälte bzw. die Abstrahlungswärme bei den üblicherweise aufgetragenen Schichtdicken in etwa proportional zur Verdunstungskälte bzw. Abstrahlungswärme und damit zur ermittelten Temperatur bzw. der Temperaturdifferenz zur Umgebung ist. Dies beschleunigt die Auswertung, so daß ein schnelles und effizient arbeitendes Steuerverfahren zur Verfügung steht.

Die in der vorstehenden Beschreibung so wie in den Ansprüchen und in der Abbildung offenbarten Merkmale der Erfindung können sowohl einzeln als auch in beliebiger Kombination für die Verwirklichung der Erfindung in ihren verschiedenen Ausführungsformen wesentlich sein.

## Patentansprüche

1. Verfahren zum Bestimmen der auf einer Flächeneinheit vorliegenden Menge eines Klebstoffes mit flüchtigem Anteil, dadurch gekennzeichnet, daß die sich aus der Verdunstungskälte des flüchtigen Anteils ergebende Temperatur oder Temperaturdifferenz zur Umgebung auf der Flächeneinheit erfaßt und mittels einer zuvor für den Klebstoff erstellten Eichkurve die Menge an auf der Flächeneinheit vorliegendem Klebstoff ermittelt wird.

2. Verfahren zum Bestimmen der auf einer Flächeneinheit vorliegenden Menge eines Heißschmelz-Klebstoffes, dadurch gekennzeichnet, daß die sich aus der Abstrahlungswärme des heiß aufgetragenen Klebstoffes ergebende Temperatur oder Temperaturdifferenz zur Umgebung auf der Flächeneinheit erfaßt und mittels einer zuvor für den Klebstoff erstellten Eichkurve die Menge an auf der Flächeneinheit vorliegendem Klebstoff ermittelt wird.

3. Verfahren nach Anspruch 1 oder 2, dadurch gekennzeichnet, daß die Temperaturen oder Temperaturdifferenzen auf mehreren punktartigen Bereichen der Flächeneinheit gemessen werden.

4. Vorrichtung zum Bestimmen der auf einer Flächeneinheit vorliegenden Menge eines Klebstoffes mit flüchtigem Anteil, dadurch gekennzeichnet, daß sie zum Erfassen der sich aus der Verdunstungskälte des flüchtigen Anteils ergebenden Temperatur oder Temperaturdifferenz zur Umgebung auf der Flächeneinheit eine Wärmebildkamera, ein Pyrometer, eine Temperatursensoranordnung oder dergleichen aufweist und daß eine Auswerteeinrichtung vorgesehen ist, welche mittels einer zuvor für den Klebstoff erstellten Eichkurve die Menge an auf der Flächeneinheit vorliegendem Klebstoff ermittelt.

5. Vorrichtung zum Bestimmen der auf einer Flächeneinheit vorliegenden Menge eines Heißschmelz-Klebstoffes, dadurch gekennzeichnet, daß sie zum Erfassen der sich aus der Abstrahlungswärme des heiß aufgetragenen Klebstoffes ergebenden Temperatur oder Temperaturdifferenz zur Umgebung auf der Flächeneinheit eine Wärmebildkamera, ein Pyrometer, eine Temperatursensoranordnung oder dergleichen aufweist und daß eine Auswerteeinrichtung vorgesehen ist, welche mittels einer zuvor für den Klebstoff erstellten Eichkurve die Menge an auf der Flächeneinheit vorliegendem Klebstoff ermittelt.

6. Verfahren zum Steuern der auf eine Flächeneinheit aufzutragenden Menge eines Klebstoffes mit flüchtigem Anteil, dadurch gekennzeichnet, daß eine vorgebbare Minimalmenge des Klebstoffes auf die Flächeneinheit aufgetragen wird, daß die sich aus der Verdunstungskälte des flüchtigen Anteils ergebende Temperatur oder Temperaturdifferenz zur Umgebung auf der Flächeneinheit erfaßt und mittels einer zuvor für den Klebstoff erstellten Eichkurve die Ist-Menge an auf der Flächeneinheit vorliegendem Klebstoff ermittelt wird, daß die Ist-Menge mit einer zuvor festgelegten Soll-Menge verglichen wird und daß die sich aus dem Vergleich ergebende Differenzmenge an Klebstoff auf die Flächeneinheit aufgetragen wird.

7. Verfahren zum Steuern der auf eine Flächeneinheit aufzutragenden Menge eines Heißschmelz-Klebstoffes, dadurch gekennzeichnet, daß eine vorgebbare Minimalmenge des Klebstoffes auf die Flächeneinheit aufgetragen wird, daß die sich aus der Abstrahlungswärme des heiß aufgetragenen Klebstoffes ergebende Temperatur oder Temperaturdifferenz zur Umgebung auf der Flächeneinheit erfaßt und mittels einer zuvor für den Klebstoff erstellten Eichkurve die Ist-Menge an auf der Flächeneinheit vorliegendem Klebstoff ermittelt wird, daß die Ist-Menge mit einer zuvor festgelegten Soll-Menge verglichen wird und daß die sich aus dem Vergleich ergebende Differenzmenge an Klebstoff auf die Flächeneinheit aufgetragen wird.

8. Verfahren nach Anspruch 6 oder 7, dadurch gekennzeichnet, daß für die Soll-Menge eine maximal zulässige Abweichung festgelegt wird und nur dann zusätzlich Klebstoff auf die Flächeneinheit aufgetragen wird, wenn die ermittelte Ist-Menge an Klebstoff geringer ist als die um die Abweichung korrigierte Soll-Menge.

9. Vorrichtung zum Steuern der auf eine Flächeneinheit aufzutragenden Menge eines Klebstoffes mit flüchtigem Anteil, dadurch gekennzeichnet, daß sie eine Wärmebildkamera, ein Pyrometer, eine Temperatursensoranordnung oder dergleichen aufweist, welche ein für die sich aus der Verdunstungskälte des flüchtigen Anteils ergebende Temperatur oder Temperaturdifferenz zur Umgebung auf der Flächeneinheit repräsentatives Signal an eine Auswerteeinrichtung zum Ermitteln einer Ist-Menge an auf die Flächeneinheit aufgetragenen Klebstoff gibt, und daß weiterhin eine Vergleichseinrichtung vorgesehen ist, die die Ist-Menge mit einer zuvor festgelegten Soll-Menge vergleicht und ein für die sich aus dem Vergleich ergebende Differenzmenge an Klebstoff, die noch auf die Flächeneinheit aufzutragen ist, repräsentatives Signal ausgibt.

10. Vorrichtung zum Steuern der auf eine Flächeneinheit aufzutragenden Menge eines Heißschmelz-Klebstoffes, dadurch gekennzeichnet, daß sie eine Wärmebildkamera, ein Pyrometer, eine Temperatursensoranordnung oder dergleichen aufweist, welche ein für die sich aus der Abstrahlungswärme des heiß aufgetragenen Klebstoffes ergebende Temperatur oder Temperaturdifferenz zur Umgebung auf der Flächeneinheit repräsentatives Signal an eine Auswerteeinrichtung zum Ermitteln einer Ist-Menge an auf die Flächeneinheit aufgetragenen Klebstoff gibt, und daß weiterhin eine Vergleichseinrichtung vorgesehen ist, die die Ist-Menge mit einer zuvor festgelegten Soll-Menge vergleicht und ein für die sich aus dem Vergleich ergebende Differenzmenge an Klebstoff, die noch auf die Flächeneinheit aufzutragen ist, repräsentatives Signal ausgibt.
